# EUROPÄISCHE PATENTSCHRIFT

(11) **EP 3 764 063 B1**
(45) Veröffentlichungstag und Bekanntmachung des Hinweises auf die Patenterteilung: **25.09.2024**
(21) Anmeldenummer: 20184406.5
(22) Anmeldetag: 07.07.2020
(51) Int. Cl.: G01D 5/14, H02K 11/215, H02K 5/22, H02K 41/03

(54) **VERFAHREN ZUR BESTIMMUNG DER ABSOLUTPOSITION EINES SCHLITTENS EINES ELEKTRISCHEN LINEARDIREKTANTRIEBS UND ELEKTRISCHER LINEARDIREKTANTRIEB**
METHOD OF DETERMINING THE ABSOLUTE POSITION OF A CARRIAGE OF AN ELECTRIC LINEAR DIRECT DRIVE AND ELECTRIC LINEAR DIRECT DRIVE
PROCÉDÉ DE DÉTERMINATION DE LA POSITION ABSOLUE D'UNE GLISSIÈRE D'UN ENTRAINEMENT DIRECT LINÉAIRE ÉLECTRIQUE ET ENTRAINEMENT DIRECT LINÉAIRE ÉLECTRIQUE

(30) Priorität: 08.07.2019 DE 102019118442
(43) Veröffentlichungstag der Anmeldung: 13.01.2021
(73) Patentinhaber: SCHUNK Electronic Solutions GmbH, 78112 St. Georgen (DE)
(72) Erfinder: Heilmann, Matthias, 78126 Königsfeld (DE); Dieterle, Franz, 77761Schiltach (DE)
(74) Vertreter: DREISS Patentanwälte PartG mbB

(56) Entgegenhaltungen:
- EP-A1- 3 376 166
- KR-A- 20150 145 407
- US-A1- 2009 243 598

## Beschreibung

Die Erfindung betrifft ein Verfahren zur Bestimmung der Absolutposition eines Schlittens eines elektrischen Lineardirektantriebs, wobei der Schlitten entlang einer Führung verfahrbar ist, wobei entlang der Führung Permanentmagnete vorgesehen sind und wobei am Schlitten ein oder mehrere Elektromagnete vorgesehen sind, so dass bei einer Bestromung der Elektromagneten der Schlitten angetrieben wird.

Derartige Verfahren sind beispielsweise aus der DE 197 48 647 C2 oder der DE 199 06 638 C1 bekannt. Dort wird ein analoges Positionssignal durch Messung der Induktivitätsverteilung zwischen zwei Messspulen erzeugt. Diese Systeme sind vergleichsweise aufwändig. Andere bekannte Systeme benötigen zusätzliche Maßverkörperungen, beispielsweise in Form von an der Führung vorzusehenden, eine Magnetkodierung aufweisenden Magnetbändern. Bei der Bestimmung der jeweils momentanen Schlittenposition ist es zudem wünschenswert, die Position des Schlittens absolut zu bestimmen, insbesondere ohne Anfahren der Hubendlagen als Referenzpositionen.

Aus der US 2009/0243598 A1 ist ein Positionsmesssystem mit einem Magnetfeldrichtungssensor und mit einer Vielzahl von Halleffektsensoren bekannt, wobei zur absoluten Positionsmessung das hochauflösende relative Messergebnis des Magnetfeldrichtungssensors und das niedrigauflösende absolute Messergebnis der Halleffektsensoren kombiniert wird.

Der vorliegenden Erfindung liegt die Aufgabe zugrunde, ein eingangs genanntes Verfahren bereitzustellen, das insbesondere auf eine spezielle Maßverkörperung verzichten kann und bei dem zusätzlich eine absolute Positionsbestimmung des Schlittens möglich ist.

Diese Aufgabe wird gelöst durch ein Verfahren mit den Merkmalen des Patentanspruchs 1. Das Verfahren zeichnet sich durch folgende Schritte aus:
a) Erfassen einer Magnetfeldcharakteristik der Permanentmagnete in der momentanen, zu bestimmenden Schlittenposition,
b) Vorhalten von Referenzcharakteristiken der Magnetfelder der Permanentmagnete und einer der jeweiligen Referenzcharakteristik zugeordneten Schlittenposition mittels wenigstens eines am Schlitten angeordneten Magnetfeldsensors,
c) Feststellen, ob eine Korrelation der erfassten Magnetfeldcharakteristik mit den jeweiligen Referenzcharakteristiken vorliegt, und
d) bei Korrelation der erfassten Magnetfeldcharakteristik mit einer Referenzcharakteristik ausgeben der dieser Referenzcharakteristik zugeordneten Schlittenposition als die absolute, momentane Schlittenposition.

Das Verfahren macht von der Erkenntnis Gebrauch, dass die an der Führung vorgesehenen Permanentmagnete, welche für den Antrieb des Schlittens bei einem Lineardirektantrieb erforderlich sind, bei genauer Betrachtung ihrer Magnetfelder bzw. eines aus den Magnetfeldern resultierenden Magnetfelds je nach Position des Schlittens unterschiedliche Magnetfeldcharakteristiken aufweisen. Die Permanentmagnete weisen insbesondere aufgrund von Fertigungstoleranzen, aufgrund von Toleranzen der Anordnung der Permanentmagnete am Lineardirektantrieb und auch aufgrund von nicht vollständig homogenen Materialeigenschaften der Permanentmagnete keine identische Magnetfeldcharakteristik auf, sondern es ergeben sich geringfügige Abweichungen. Diese Abweichungen können mittels entsprechend hochauflösenden Magnetfeldsensoren, die insbesondere auch eine höhe örtliche Auflösung aufweisen, erfasst werden. Die von den Permanentmagneten erzeugten Magnetfelder bzw. das daraus resultierende Magnetfeld ist folglich über den Verfahrweg des Schlittens an keiner Stelle identisch; an jeder Position des Schlittens weist das zu erfassende Magnetfeld der Permanentmagnete einen einzigartigen "Fingerabdruck" auf, der als Referenzcharakteristik mit der jeweils zugehörigen Schlittenposition hinterlegt wird.

Dabei ist denkbar, dass die Permanentmagnete auch bewusst mit insbesondere geringfügig unterschiedlichen Abständen am Lineardirektantrieb angeordnet werden, um einen solchen einzigartigen "Fingerabdruck" zu provozieren. Die Abstände sind dabei so gering unterschiedlich, dass sie keine negative Auswirkung auf das Antriebsverhalten des Schlittens bewirken. Die Unterschiede in den Abständen sind allerdings so groß, dass eindeutige Magnetfeldcharakteristiken aufgenommen werden können.

Gerade dann, wenn hochauflösende Magnetfeldsensoren Verwendung finden, können kleinste Unterschiede von Magnetfeldcharakteristiken der an der Führung angeordneten Permanentmagneten erkannt werden. Über den maximalen Verfahrweg des Schlittens hinweg können in einer vorbereitenden Referenzfahrt für jede Schlittenposition zugehörige Magnetfeldcharakteristiken aufgezeichnet werden. Damit kann jeder Position des Schlittens eine Referenzcharakteristik zugeordnet werden. Die Referenzcharakteristiken werden folglich mit der Referenzfahrt einmal eingelernt und die zugehörigen Schlittenpositionen zu den Referenzcharakteristiken vorgehalten bzw. hinterlegt.

Wird der Lineardirektantrieb nach der einmalig durchzuführenden Referenzfahrt in Betrieb genommen, so kann in der jeweiligen Position des Schlittens die jeweilige Magnetfeldcharakteristik erfasst werden und mit einer vorgehaltenen Referenzcharakteristik verglichen werden. Korreliert die erfasste Magnetfeldcharakteristik mit einer hinterlegten Referenzcharakteristik, so kann die dieser Referenzcharakteristik zugeordnete Schlittenposition als die momentane absolute Schlittenposition ausgegeben werden.

Das erfindungsgemäße Verfahren hat folglich den Vorteil, dass keine zusätzliche Maßverkörperung, beispielsweise in Form von an der Führung vorzusehenden Maß-Magnetbändern, vorzusehen ist. Ferner hat das Verfahren den Vorteil, dass lediglich einmalig die Referenzcharakteristiken mit zugehörigen Schlittenpositionen mittels einer Referenzfahrt hinterlegt werden müssen. Bei wiederholter Inbetriebnahme des Lineardirektantriebs kann ohne wiederholte Durchführung einer Referenzfahrt aufgrund der erfassten Magnetfeldcharakteristik sofort die jeweils momentane, absolute Schlittenposition bestimmt werden.

Unter Korrelieren wird insbesondere das Erkennen einer geeigneten Beziehung zwischen den zu vergleichenden Charakteristiken verstanden; insbesondere kann es sich hierbei um eine wenigstens weitestgehende Übereinstimmung der Charakteristiken handeln. Allerdings ist auch denkbar, dass lediglich ein oder mehrere Merkmale der Charakteristiken, wie besondere Ereignisse, Zuständen oder Funktionen der Korrelation zu Grunde gelegt werden.

Der gesamte Verfahrweg des Schlittens kann in eine Anzahl von n Punkten unterteilt werden, in denen die jeweilige Magnetfeldcharakteristik erfasst wird. Die einzelnen Punkte können dabei einen definierten Abstand zueinander aufweisen, je nachdem wie hoch die Auflösung der Bestimmung der absoluten Schlittenposition sein soll. Denkbar ist, dass der Abstand der einzelnen Punkte im Millimeterbereich liegt. Andererseits ist denkbar, dass der Abstand der einzelnen Punkte im zehntel oder hundertstel Millimeterbereich liegt, sodass die absolute Position über den gesamten Verfahrweg zumindest annähernd stufenlos bestimmt werden kann.

Vorteilhafterweise beruhen die erfassten Magnetfeldcharakteristiken und/oder die vorgehaltenen Referenzcharakteristiken auf der magnetischen Feldstärke und/oder der magnetischen Flussdichte der Permanentmagnete bzw. deren Magnetfeldern. Über geeignete Magnetfeldsensoren kann die magnetische Feldstärke und/oder die magnetische Flussdichte der Permanentmagnete hochgenau für einzelne definierte Positionen des Schlittens erfasst werden.

Um eine genügend große Anzahl von aussagekräftigen Messwerten zu erhalten, ist vorteilhaft, wenn die erfasste Magnetfeldcharakteristik und/oder die vorgehaltene Referenzcharakteristik in wenigstens zwei und vorzugsweise in drei Raumrichtungen bestimmt wird. Hierfür kann insbesondere wenigstens ein 3-Achs-Magnetfeldsensor Verwendung finden. Derartige Sensoren weisen in mehrere Raumrichtungen eine hohe Auflösung auf. Über die von diesen Sensoren bereitgestellten Messwerten kann folglich in jeder Position des Schlittens eine ausreichend genaue Magnetfeldcharakteristik bzw. Referenzcharakteristik bereitgestellt werden. Denkbar ist auch, dass zur Bereitstellung einer ausreichenden Anzahl von Messergebnissen in einer Position des Schlittens ein Sensor-Array zur Erfassung eines Messbereichs Verwendung findet. Ein solcher Messbereich kann sich dabei vorzugsweise in und/oder Verfahrrichtung und quer zur Verfahrrichtung über jeweils einen Bereich von 0,2 bis 2,0 mm und weiter vorzugsweise über Bereich von 0,75 bis 1,25 mm und weiter vorzugsweise 1,0 mm erstrecken. Dadurch können mehrere Messwerte innerhalb des jeweiligen Messbereichs aufgenommen werden. Aus der größeren Anzahl der Messwerte kann die jeweilige Magnetfeldcharakteristik abgeleitet werden, deren Eindeutigkeit je größer ist, je mehr Messwerte in einer Schlittenposition erfasst werden.

In diesem Zusammenhang ist es vorteilhaft, wenn die Referenzcharakteristiken in Schritt b) und die erfassten Magnetfeldcharakteristik in Schritt c) jeweils als Muster vorgehalten werden, wenn in Schritt c) ein Mustervergleich erfolgt und wenn in Schritt d) die Korrelation auf einer Mustererkennung der verglichenen Muster beruht. Je mehr Messwerte bzw. Informationen einem Muster zu Grunde liegen, desto größer ist dessen Eindeutigkeit und desto zuverlässiger kann die Korrelation insbesondere in Form der Mustererkennung erfolgen.

Die Muster können in diesem Zusammenhang insbesondere eine Wertematrix aus Messwerten der magnetischen Feldstärke und/oder der magnetischen Flussdichte der Permanentmagnete, insbesondere in drei Raumrichtungen, quer zur Bewegungsrichtung und/oder längs zur Verfahrrichtung des Schlittens beinhalten.

Vorteilhafterweise kann das das erfindungsgemäße Verfahren zumindest bei der Inbetriebnahme des Lineardirektantriebs zur Bestimmung der absoluten Position des Schlittens Verwendung finden. Während des Betriebs des Lineardirektantriebs kann die Positionsbestimmung des Schlittens dann auch auf andere Art und Weise erfolgen, beispielsweise über beim Verfahren des Schlittens erfassbare Sinus- uns Cosinus-Signale, die aus den Magnetfeldern der Permanentmagnete resultieren.

Die eingangs genannte Aufgabe wird auch gelöst durch einen Lineardirektantrieb mit den Merkmalen des Patentanspruchs 7. Ein solcher Lineardirektantrieb umfasst eine Führung und einen entlang der Führung bewegbaren Schlitten, wobei entlang der Führung Permanentmagnete angeordnet sind, und wobei am Schlitten ein oder mehrere Elektromagnete angeordnet sind, so dass bei einer Bestromung der Elektromagnete der Schlitten auf der Führung angetrieben wird. Ferner ist ein Positionsmesssystem zur Bestimmung der momentanen Schlittenposition vorgesehen.

Der erfindungsgemäße Lineardirektantrieb zeichnet sich dadurch aus, dass das Positionsmesssystem wenigstens einen Magnetfeldsensor, einen Auswerter und einen Speicher umfasst. Der wenigstens eine Magnetfeldsensor ist dabei am Schlitten angeordnet und zur Erfassung von wenigstens einer Magnetfeldcharakteristik der Permanentmagnete in der jeweiligen Schlittenposition und zur Erzeugung von die jeweilige Magnetfeldcharakteristik repräsentierenden Messsignalen eingerichtet. Im Speicher sind Referenzcharakteristiken der Magnetfelder der Permanentmagnete sowie für jede Referenzcharakteristik eine zugeordnete Schlittenposition hinterlegt. Der Auswerter ist eingerichtet, die Messsignale auszuwerten und mit den Referenzcharakteristiken zu vergleichen und bei Korrelation des jeweils ausgewerteten Messsignals mit einer Referenzcharakteristik die dieser Referenzcharakteristik zugeordnete Schlittenposition als die momentane absolute Schlittenposition auszugeben.

Über den wenigstens einen Magnetfeldsensor wird folglich in der jeweiligen momentanen Position des Schlittens die Magnetfeldcharakteristik erfasst. Die diese Charakteristik repräsentierenden Messsignale werden mit den im Speicher hinterlegten Referenzcharakteristiken verglichen. Wird eine Korrelation, insbesondere eine wenigstens weitgehende Übereinstimmung zwischen den ausgewerteten Messsignalen, die die erfasste Magnetfeldcharakteristik repräsentieren, mit einer Referenzcharakteristik festgestellt, so wird als momentane Schlittenposition die der Referenzcharakteristik zugehörige Schlittenposition als die momentane, absolute Schlittenposition ausgegeben.

Ein derartiger elektrischer Lineardirektantrieb hat die gleichen Vorteile wie das erfindungsgemäße Verfahren. Es sind keine zusätzlichen Maßverkörperungen erforderlich. Die Schlittenposition wird anhand der Permanentmagnete, welche dem Antrieb zuzuordnen sind, bestimmt. Ferner ist eine absolute Position des Schlittens bei bzw. unmittelbar nach Inbetriebnahme des Lineardirektantriebs bestimmbar.

Als Magnetfeldsensor können insbesondere 3-Achs-Magnetfeldsensoren Verwendung finden. Bei derartigen Sensoren handelt es sich um vergleichsweise hochgenaue Sensoren, welche eine sehr hohe örtliche Auflösung aufweisen und/oder mittels denen kleinste Unterschiede an den von den Permanentmagneten erzeugten Magnetfeldern erkannt werden können. Vorteilhafterweise wird nicht nur ein Magnetfeldsensor vorgesehen, sondern zwei oder mehrere Magnetfeldsensoren. Der wenigstens eine Magnetfeldsensor kann dabei vorzugsweise einen sich in Verfahrrichtung und quer zur Verfahrrichtung erstreckenden Messbereich erfassen, um eine ausreichend hohe Anzahl von Messergebnissen zur Feststellung der Eindeutigkeit der Magnetfeldcharakteristik zu erhalten.

Vorteilhafterweise ist der Lineardirektantrieb zur Ausführung des erfindungsgemäßen Verfahrens ausgebildet. Weitere Einzelheiten und vorteilhafte Ausgestaltungen der Erfindung sind der nachfolgenden Beschreibung zu entnehmen, anhand derer die Erfindung näher beschrieben und erläutert ist.

Es zeigen:
Figur 1 einen erfindungsgemäßen elektrischen Lineardirektantrieb;
Figur 2 einen schematischen Längsschnitt durch den Direktantrieb gemäß Figur 1;
Figur 3 eine schematische Darstellung des Positionsmesssystems des Lineardirektantriebs gemäß Figur 1;
Figur 4 eine schematische Darstellung von über den Verfahrweg des Schlittens erfassten Magnetfeldcharakteristiken.

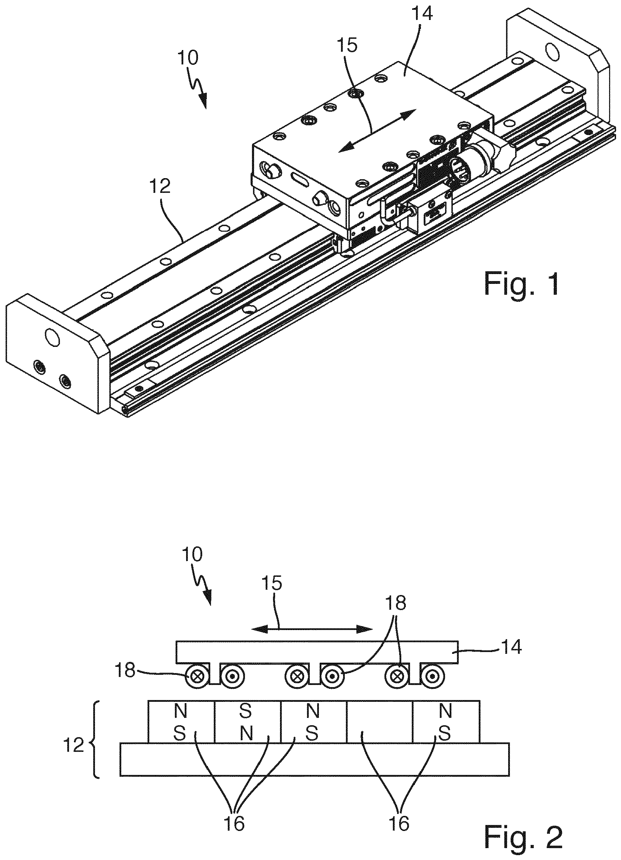

In der Figur 1 ist ein elektrischer Lineardirektantrieb 10 gezeigt, der eine Führung 12 und einen entlang der Führung 12 geführten Schlitten 14 aufweist. Der Schlitten 14 ist dabei entlang der Verfahrrichtung 15 auf der Führung 12 hin und her bewegbar. Wie im Schnitt gemäß Figur 2 angedeutet ist, sind entlang der Führung 12 Permanentmagnete 16 vorgesehen, mit nach oben hin zum Schlitten 14 wechselseitig angeordneter Polung. Wie ferner aus der systematischen Darstellung gemäß Figur 2 deutlich wird, sind am Schlitten 14 Spulen zur Bildung von Elektromagneten 18 vorgesehen, so dass Wechselwirkung zwischen den Elektromagneten 18 und den Permanentmagneten 16 bei einer Bestromung der Elektromagnete 18 der Schlitten 14 auf der Führung 12 angetrieben wird.

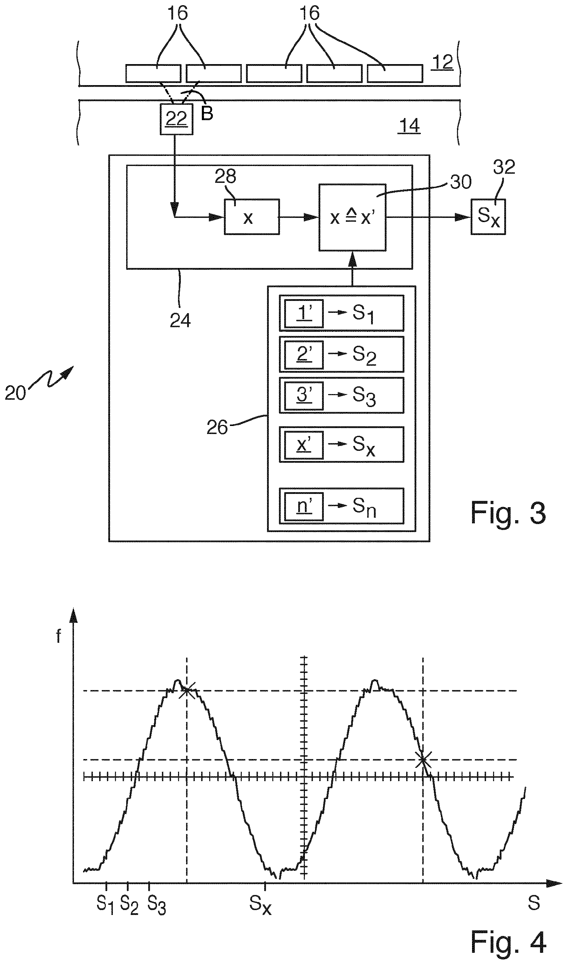

Zur Bestimmung der jeweiligen, momentanen Schlittenposition sₓ auf der Führung 12 ist ein Positionsmesssystem 20, das in Figur 3 schematisch dargestellt ist, vorgesehen. Das Positionsmesssystem 20 ist im oder am Schlitten 14 vorgesehen und umfasst wenigstens einen Magnetfeldsensor 22, einen Auswerter 24 und einen Speicher 26. Der Magnetfeldsensor 22, der eine hohe örtlicher Auflösung aufweist, erfasst die Magnetfeldcharakteristik der Permanentmagnete 16 über einen Messbereich B in der jeweiligen momentanen Schlittenposition sₓ. Der Messbereich B kann sich dabei über einen Bereich von ca. 1 mm² bis 3 mm² erstrecken, der sich insbesondere in Verfahrrichtung 15 und in quer dazu erstreckender Richtung erstreckt. Der Magnetfeldsensor 22 erzeugt aus der über den Bereich B erfassten Messwerten eine Magnetfeldcharakteristik sowie die die jeweilige Magnetfeldcharakteristik repräsentierenden Messsignale 28. Ferner ist denkbar, ein Sensor-Array Verwendung findet, das den Bereich B erfasst. Auch denkbar ist, dass ein 3-Achs-Magnetfeldsensoren Verwendung finden, die in Messwerte verschiedenen Raumrichtungen aufnehmen können.

Im Speicher 26 sind unterschiedliche Referenzcharakteristiken 1' bis n' hinterlegt, wobei den einzelnen Referenzcharakteristiken 1' bis n' jeweils eine Schlittenposition S₁ bis Sₙ zugeordnet sind.

Im Auswerter 24 wird nun das die jeweilige erfasste Magnetfeldcharakteristik repräsentierende Messsignal 28 in einem Vergleicher 30 mit den hinterlegten Referenzcharakteristiken 1' bis n' verglichen. Wird nun eine Korrelation und insbesondere eine Übereinstimmung zwischen dem Messsignal 28 mit einer hinterlegten Referenzcharakteristik 1', 2', 3', ... , x', ... , n' festgestellt, so wird die dieser Referenzcharakteristik zugeordnete Schlittenposition s₁, s₂, s₃, ..., sₓ, ... , sₙ als die momentan zu bestimmende, absolute Schlittenposition an einem Ausgang 32 ausgegeben.

Die im Messbereich B aufgenommen Messsignale bilden vorzugsweise eine Wertematrix und damit ein Muster von Messsignalen, auf derer die Magnetfeldcharakteristik beruht. Im Vergleicher 30 werden die Magnetfeldcharakteristiken, also die Muster verglichen und die Korrelation erfolgt mit einer Mustererkennung der zu vergleichenden Muster.

Damit kann ein Lineardirektantrieb 10 mit einem absolut messenden Positionsmesssystem bereitgestellt werden, das unmittelbar nach Inbetriebnahme die absolute, jeweils momentane Position des Schlittens 14 bestimmen kann.

In der Figur 4 ist über den Weg s des Schlittens 14 bzw. des Magnetfeldsensors 22 die Magnetfeldcharakteristik f wiedergegeben. Aus Figur 4 soll deutlich werden, dass die Magnetfeldcharakteristik f in jeder Position S₁, S₂, S₃, ..., S_{X} jeweils unterschiedlich ist. In jeder der Positionen S₁, S₂, S₃, ..., S_{X} sind aufgrund der Erfassung des Messbereichs B mehrere Messwerte für das Magnetfeld hinterlegt, die letztlich die Wertematrix bilden. Aufgrund der unterschiedlichen und eindeutigen Werte der Charakteristiken kann durch Vergleich mit den Referenzcharakteristiken auf die jeweilige Absolutposition s des Schlittens 14 rückgeschlossen werden.

Zur Hinterlegung der Referenzcharakteristiken ist es erforderlich, den Lineardirektantrieb 10 vor Inbetriebnahme mit einer Referenzfahrt einmalig einzulernen. Durch den hochauflösenden Magnetfeldsensor 22 kann eine hohe örtliche Auflösung bereitgestellt werden und es können in den verschiedenen Schlittenpositionen kleinste Unterschiede von Magnetfeldcharakteristiken der an der Führung 12 vorgesehenen Permanentmagneten 16 über den Verfahrweg erkannt werden. Die Referenzcharakteristiken werden beim Einlernen über den maximalen Verfahrweg des Schlittens 14 hinweg für jede Schlittenposition mit dem Magnetfeldsensor 22 aufgezeichnet. Damit kann jeder Position des Schlittens 14 eine Referenzcharakteristik zugeordnet werden. Die Referenzcharakteristiken müssen folglich nur einmal eingelernt und die zugehörigen Schlittenpositionen zu den Referenzcharakteristiken im Speicher 26 hinterlegt werden. Im Betrieb des Lineardirektantriebs 10 kann dann auf die im Speicher 26 hinterlegten Referenzcharakteristiken mit den zugeordneten Schlittenpositionen zurückgegriffen werden.

## Patentansprüche

1. Verfahren zur Bestimmung der absoluten Schlittenposition (sₓ) eines Schlittens (14) eines elektrischen Lineardirektantriebs (10), wobei der Schlitten (14) entlang einer Führung (12) in Verfahrrichtung verfahrbar ist, wobei entlang der Führung (12) Permanentmagnete (16) angeordnet sind und wobei am Schlitten (14) ein oder mehrere Elektromagnete (18) angeordnet sind, so dass bei einer Bestromung der Elektromagneten (18) der Schlitten (14) angetrieben wird, mit folgenden Schritten
a) Erfassen einer Magnetfeldcharakteristik der Permanentmagnete (16) in der zu bestimmenden Schlittenposition (sₓ) mittels wenigstens eines am Schlitten (14) angeordneten Magnetfeldsensors (22),
b) Vorhalten von Referenzcharakteristiken (1' bis n') der Magnetfelder der Permanentmagnete (16) und einer der jeweiligen Referenzcharakteristik (1' bis n') zugeordneten Schlittenposition (s₁ bis sₙ),
c) Feststellen, ob eine Korrelation der erfassten Magnetfeldcharakteristik mit den jeweiligen Referenzcharakteristiken (1' bis n') vorliegt, und
d) bei Korrelation der erfassten Magnetfeldcharakteristik mit einer Referenzcharakteristik (1' bis n') ausgeben der dieser Referenzcharakteristik (1' bis n') zugeordneten Schlittenposition (s₁ bis sₙ) als die absolute, momentane Schlittenposition (sₓ).

2. Verfahren nach Anspruch 1, **dadurch gekennzeichnet, dass** die erfasste Magnetfeldcharakteristik und/oder die vorgehaltene Referenzcharakteristik auf der magnetischen Feldstärke und/oder der magnetischen Flussdichte der Permanentmagnete (16) beruhen.

3. Verfahren nach Anspruch 1, **dadurch gekennzeichnet, dass** die erfasste Magnetfeldcharakteristik und/oder die vorgehaltene Referenzcharakteristik in wenigstens zwei und vorzugsweise in drei Raumrichtungen erfasst wird.

4. Verfahren nach Anspruch 1 oder 2, **dadurch gekennzeichnet, dass** die erfasste Magnetfeldcharakteristik und/oder die vorgehaltene Referenzcharakteristik jeweils über einen Messbereich (B) erfasst wird.

5. Verfahren nach einem der vorhergehenden Ansprüche, **dadurch gekennzeichnet, dass** die Referenzcharakteristiken in Schritt b) und die erfassten Magnetfeldcharakteristik in Schritt c) jeweils als Muster vorgehalten werden, dass in Schritt c) ein Mustervergleich erfolgt und dass in Schritt d) die Korrelation auf einer Mustererkennung der zu vergleichenden Mustern beruht.

6. Verwendung eines Verfahrens
nach einem der vorhergehenden Ansprüche bei der Inbetriebnahme des Lineardirektantriebs (10) zur Bestimmung der absoluten Position des Schlittens (14).

7. Elektrischer Lineardirektantrieb (10) mit einer Führung (12) und mit einem entlang der Führung (12) bewegbaren Schlitten (14), wobei entlang der Führung (12) Permanentmagnete (16) angeordnet sind und wobei
am Schlitten (14) ein oder mehrere Elektromagnete angeordnet sind, so dass bei einer Bestromung der Elektromagnete der Schlitten (14) auf der Führung (12) angetrieben wird, und mit einem Positionsmesssystem (20) zur Bestimmung der absoluten Schlittenposition (sₓ),
wobei das Positionsmesssystem (20) wenigstens einen Magnetfeldsensor (22), einen Auswerter (24) und einen Speicher (26) umfasst,
wobei der Magnetfeldsensor (22) am Schlitten (14) angeordnet ist und zur Erfassung von wenigstens einer Magnetfeldcharakteristik der Permanentmagnete (16) in der jeweiligen Schlittenposition und zur Erzeugung von die jeweilige Magnetfeldcharakteristik repräsentierenden Messsignalen (28) eingerichtet ist,
wobei im Speicher (26) Referenzcharakteristiken (1' bis n') der Magnetfelder der Permanentmagnete (16) und für jede Referenzcharakteristik (1' bis n') eine zugeordnete Schlittenpositionen (s₁ bis sₙ) hinterlegt sind,
wobei der Auswerter (24) eingerichtet ist, die Messsignale (28) auszuwerten und mit den Referenzcharakteristiken (1' bis n') zu vergleichen und bei Korrelation des jeweils ausgewerteten Messsignals (28) mit einer Referenzcharakteristik (1' bis n') die dieser Referenzcharakteristik (1' bis n') zugeordneten Schlittenposition (s₁ bis sₙ) als die absolute Schlittenposition (sₓ) auszugeben.

8. Elektrischer Lineardirektantrieb (10) nach Anspruch 7, **dadurch gekennzeichnet, dass** als Magnetfeldsensor (22) ein 3-Achs-Magnetfeldsensor Verwendung findet.

9. Elektrischer Lineardirektantrieb (10) nach Anspruch 7 oder 8, **dadurch gekennzeichnet, dass** als Magnetfeldsensor (22) ein Sensor-Array zur Erfassung eines Erfassungsbereichs (B) Verwendung findet.

10. Elektrischer Lineardirektantrieb (10) nach Anspruch 7, 8 oder 9, eingerichtet zur Durchführung des Verfahrens nach einem der Ansprüche 1 bis 6.

## Claims

1. Method for determining the absolute carriage position (sₓ) of a carriage (14) of an electric linear direct drive (10), wherein the carriage (14) can be moved along a guide (12) in the direction of travel, wherein permanent magnets (16) are arranged along the guide (12) and wherein one or more electromagnets (18) are arranged on the carriage (14) so that when the electromagnets (18) are energized, the carriage (14) is driven, comprising the following steps:
a) detecting a magnetic field characteristic of the permanent magnets (16) in the carriage position (sₓ) to be determined by means of at least one magnetic field sensor (22) arranged on the carriage (14),
b) retaining reference characteristics (1' to n') of the magnetic fields of the permanent magnets (16) and of a carriage position (s₁ to sₙ) associated with the relevant reference characteristic (1' to n'),
c) ascertaining whether there is a correlation between the detected magnetic field characteristic and the respective reference characteristics (1' to n'), and
d) when correlating the detected magnetic field characteristic with a reference characteristic (1' to n'), outputting the carriage position (s₁ to sₙ) assigned to this reference characteristic (1' to n') as the absolute, instantaneous carriage position (sₓ).

2. Method according to claim 1, **characterized in that** the detected magnetic field characteristic and/or the retained reference characteristic are based on the magnetic field strength and/or the magnetic flux density of the permanent magnets (16).

3. Method according to claim 1, **characterized in that** the detected magnetic field characteristic and/or the retained reference characteristic is detected in at least two and preferably in three spatial directions.

4. Method according to claim 1 or claim 2, **characterized in that** the detected magnetic field characteristic and/or the retained reference characteristic is in each case detected over a measuring range (B).

5. Method according to any of the preceding claims, **characterized in that** the reference characteristics in step b) and the detected magnetic field characteristic in step c) are each retained as patterns, **in that** a pattern comparison is carried out in step c) **and in that** in step d) the correlation is based on a pattern recognition of the patterns to be compared.

6. Use of a method according to any of the preceding claims when commissioning the linear direct drive (10) for determining the absolute position of the carriage (14).

7. Electric linear direct drive (10) comprising a guide (12) and comprising a carriage (14) movable along the guide (12), wherein permanent magnets (16) are arranged along the guide (12) and wherein one or more electromagnets are arranged on the carriage (14) so that when the electromagnets are energized, the carriage (14) is driven on the guide (12), and comprising a position measuring system (20) for determining the absolute carriage position (sₓ),
wherein the position measuring system (20) comprises at least one magnetic field sensor (22), an evaluator (24) and a memory (26),
wherein the magnetic field sensor (22) is arranged on the carriage (14) and is designed to detect at least one magnetic field characteristic of the permanent magnets (16) in the relevant carriage position and to generate measurement signals (28) representing the relevant magnetic field characteristic,
wherein reference characteristics (1' to n') of the magnetic fields of the permanent magnets (16) and an associated carriage position (s₁ to sₙ) for each reference characteristic (1' to n') are stored in the memory (26),
wherein the evaluator (24) is configured to evaluate the measurement signals (28) and to compare them with the reference characteristics (1' to n') and, upon correlation of the evaluated measurement signal (28) with a reference characteristic (1' to n'), to output the carriage position (s₁ to sₙ) associated with this reference characteristic (1' to n') as the absolute carriage position (sₓ).

8. Electric linear direct drive (10) according to claim 7, **characterized in that** a 3-axis magnetic field sensor is used as the magnetic field sensor (22).

9. Electric linear direct drive (10) according to claim 7 or claim 8, **characterized in that** a sensor array for detecting a detection region (B) is used as the magnetic field sensor (22).

10. Electric linear direct drive (10) according to claim 7, 8 or 9, configured to carry out the method according to any of claims 1 to 6.

## Revendications

1. Procédé pour déterminer la position absolue de chariot (sₓ) d'un chariot (14) d'un entraînement direct linéaire électrique (10), dans lequel le chariot (14) peut être déplacé le long d'un guide (12) dans la direction de déplacement, dans lequel des aimants permanents (16) sont disposés le long du guide (12), et
dans lequel un ou plusieurs électroaimants (18) sont disposés sur le chariot (14), de sorte que lorsque les
électroaimants (18) sont alimentés en courant, le chariot (14) est entraîné, avec les étapes suivantes :
a) la détection d'une caractéristique de champ magnétique des aimants permanents (16) dans la position de chariot (sₓ) à déterminer au moyen d'au moins un capteur de champ magnétique (22) disposé sur le chariot (14),
b) la conservation de caractéristiques de référence (1' à n') des champs magnétiques des aimants permanents (16) et d'une position de chariot (s₁ à sₙ) associée à la caractéristique de référence (1' à n') respective, d) le fait de déterminer s'il existe une corrélation de la caractéristique de champ magnétique détectée avec les caractéristiques de référence (1' à n') respectives, et
c) d) en cas de corrélation de la caractéristique de champ magnétique détectée avec une caractéristique de référence (1' à n'), l'émission de la position de chariot (s₁ à sₑ) associée à cette caractéristique de référence (1' à n') en tant que position de chariot absolue et momentanée (sₓ).

2. Procédé selon la revendication 1, **caractérisé en ce que** la caractéristique de champ magnétique détectée et/ou la caractéristique de référence conservée reposent sur l'intensité de champ magnétique et/ou la densité de flux magnétique des aimants permanents (16).

3. Procédé selon la revendication 1, **caractérisé en ce que** la caractéristique de champ magnétique détectée et/ou la caractéristique de référence conservée est détectée dans au moins deux et de préférence dans trois directions spatiales.

4. Procédé selon la revendication 1 ou 2, **caractérisé en ce que** la caractéristique de champ magnétique détectée et/ou la caractéristique de référence conservée est respectivement détectée sur une plage de mesure (B).

5. Procédé selon l'une quelconque des revendications précédentes, **caractérisé en ce que** les caractéristiques de référence dans l'étape b) et les caractéristiques de champ magnétique détectées dans l'étape c) sont respectivement conservées sous forme de modèles, **en ce qu'**une comparaison de modèles est effectuée dans l'étape c) et **en ce que**, dans l'étape d), la corrélation repose sur une reconnaissance de modèles des modèles à comparer.

6. Utilisation d'un procédé selon l'une quelconque des revendications précédentes lors de la mise en service de l'entraînement direct linéaire (10) pour déterminer la position absolue du chariot (14).

7. Entraînement direct linéaire électrique (10) avec un guide (12) et avec un chariot (14) mobile le long du guide (12), dans lequel
des aimants permanents (16) sont disposés le long du guide (12) et dans lequel un ou plusieurs électroaimants sont disposés sur le chariot (14), de sorte que le chariot (14) est entraîné sur le guide (12) lorsque les électroaimants sont alimentés en courant, et avec un système de mesure de position (20) pour déterminer la position de chariot absolue (sₓ).
dans lequel le système de mesure de position (20) comprend au moins un capteur de champ magnétique (22), un analyseur (24) et une mémoire (26),
dans lequel le capteur de champ magnétique (22) est disposé sur le chariot (14) et est conçu pour détecter au moins une
caractéristique de champ magnétique des aimants permanents (16) dans la position de chariot respective et pour générer des signaux de mesure (28) représentant la caractéristique de champ magnétique respective,
dans lequel des caractéristiques de référence (1' à n') des champs magnétiques des aimants permanents (16) et, pour chaque caractéristique de référence (1' à n'), une position de chariot (s₁ à sₙ) associée sont enregistrées dans la mémoire (26),
dans lequel l'analyseur (24) est conçu pour analyser les signaux de mesure (28) et les comparer aux caractéristiques de référence (1' à n') et, en cas de corrélation du signal de mesure (28) respectivement analysé avec une caractéristique de référence (1' à n'), pour émettre la position de chariot (s₁ à sₙ) associée à cette caractéristique de référence (1' à n') en tant que position de chariot absolue (sₓ).

8. Entraînement direct linéaire électrique (10) selon la revendication 7, **caractérisé en ce qu'**un capteur de champ magnétique à 3 axes est utilisé comme capteur de champ magnétique (22).

9. Entraînement direct linéaire électrique (10) selon la revendication 7 ou 8, **caractérisé en ce qu'**un réseau de capteurs pour détecter une zone de détection (B) est utilisé comme capteur de champ magnétique (22).

10. Entraînement direct linéaire électrique (10) selon la revendication 7, 8 ou 9, conçu pour mettre en œuvre le procédé selon l'une quelconque des revendications 1 à 6.
